# EUROPEAN PATENT APPLICATION

(11) **EP 3 985 635 A1**
(43) Date of publication of application: **20.04.2022**
(21) Application number: 20821845.3
(22) Date of filing: 16.03.2020
(51) Int. Cl.: G08G 1/00, G08G 1/16, G06T 7/00

(54) **OUTSIDE ENVIRONMENT RECOGNITION DEVICE**

(30) Priority: 14.06.2019 JP 2019111072
(71) Applicant: MAZDA MOTOR CORPORATION, Hiroshima 730-8670 (JP)
(72) Inventor: HORIGOME Daisuke, Aki-gun, Hiroshima 730-8670 (JP)
(74) Representative: Behr, Wolfgang
(86) International application number: PCT/JP2020/011539
(87) International publication number: WO 2020/250528

(57) **Abstract**

A recognition processor (41) recognizes an external environment of a mobile object, based on image data acquired by an imaging unit (11) that takes an image of the external environment of the mobile object, and outputs a recognition result of the external environment of the mobile object, based on the external environment of the mobile object recognized based on the image data and the detection result from a detection unit (12) that detects the external environment of the mobile object. An abnormality detector 44 detects an abnormality of a data processing system including the imaging unit (11), the recognition processor (41), and detection unit (12), based on consistency between the external environment recognized by the recognition processor (41), based on the image data, and the external environment detected by the detection unit (12).

## Description

### TECHNICAL FIELD

The technology disclosed herein relates to an external environment recognition device that recognizes an external environment of a mobile object.

### BACKGROUND ART

Patent Document 1 discloses an image processing apparatus to be mounted in a vehicle. The image processing apparatus includes: a road surface detector that detects a road surface area from an input image based on an image taken by a camera; a time-series verifier that performs a time-series verification of a detection result of the road surface area in the input image; a sensing area selector that sets a sensing area for sensing an object in the input image, based on the detection result of the road surface area from the road surface detector and a result of the time-series verification from the time-series verifier; and a sensor that senses the object in the sensing area.

### CITATION LIST

### PATENT DOCUMENT

PATENT DOCUMENT 1: Japanese Unexamined Patent Publication No. 2018-22234

### SUMMARY OF THE INVENTION

### TECHNICAL PROBLEM

Such an apparatus disclosed in Patent Document 1 is provided with a data processing system targeted for abnormality detection, which may be provided with redundancy in order to detect an abnormality thereof. Specifically, a system (so-called dual lockstep system) may be employed. The system is provided with two processing units that perform the same data processing. The same data is input to the two processing units to compare outputs from the two processing units. If the outputs are different from each other, it is determined that the data processing has an abnormality. However, the data processing system provided with redundancy includes a redundant configuration, resulting in an increase in circuit size and a power consumption of the data processing system.

In view of the foregoing background, it is therefore an object of the present disclosure to provide an external environment recognition device capable of reducing the increase in circuit size and power consumption due to addition of an abnormality detection function.

### SOLUTION TO THE PROBLEMS

The technology disclosed herein relates to an external environment recognition device that recognizes an external environment of a mobile object. The external environment recognition device includes: a recognition processor that recognizes an external environment of the mobile object, based on image data acquired by an imaging unit that takes an image of the external environment of the mobile object, and outputs a recognition result of the external environment of the mobile object, based on the external environment of the mobile object recognized based on the image data and a detection result from a detection unit that detects the external environment of the mobile object; and an abnormality detector that detects an abnormality of a data processing system including the imaging unit, the recognition processor, and the detection unit, based on consistency between the external environment recognized by the recognition processor based on the image data and the external environment detected by the detection unit.

This configuration allows the abnormality of the data processing system targeted for abnormality detection to be detected without providing the entire data processing system with redundancy. This reduces the increase in circuit size and power consumption due to addition of an abnormality detection function compared with the case in which the entire data processing system targeted for abnormality detection is provided with redundancy.

The detection unit may be configured to transmit sensing waves toward the external environment of the mobile object and receive reflected waves from the external environment to detect the external environment of the mobile object. The abnormality detector may be configured to detect the abnormality of the data processing system, based on consistency between at least one of targets included in the external environment recognized by the recognition processor based on the image data and at least one of the targets included in the external environment detected by the detection unit.

In this configuration, the abnormality detector detects the abnormality of the data processing system, based on the consistency between the target recognized by the recognition processor based on the image data and the target detected by the detection unit. The detection unit is more likely to detect a target (e.g., a vehicle) included in the external environment of the mobile object than the movable area (e.g., the roadway) included in the external environment of the mobile object. The detection of the abnormality of the data processing system, based on the consistency between the target recognized by the recognition processor based on the image data and the target detected by the detection unit allows improvement in accuracy of detecting the abnormality of the data processing system, compared with the case of the detection of the abnormality of the data processing system, based on the consistency between the movable area recognized by the recognition processor based on the image data and the movable area detected by the detection unit.

The abnormality detector may be configured to detect the abnormality of the data processing system, based on consistency between a recognition result from the recognition processor based on the image data and a detection result from the detection unit for at least one target, among the targets included in the external environment of the mobile object, whose distance from the mobile object is within a predetermined distance range.

This configuration allows the target whose distance from the mobile object is appropriate for properly taking an image by the imaging unit and properly performing detection by the detection unit to be set as a target to be processed by the abnormality detector. This enables the detection of the abnormality of the data processing system based on the consistency between the target properly recognized by the recognition processor based on the image data and the target properly detected by the detection unit, thereby improving the accuracy of detecting the abnormality of the data processing system.

The abnormality detector may be configured to detect the abnormality of the data processing system, based on the duration of a failure in consistency between the external environment recognized by the recognition processor based on the image data and the external environment detected by the detection unit.

In this configuration, the abnormality of the data processing system is detected based on the duration of a failure in the consistency between the external environment recognized by the recognition processor based on the image data and the external environment detected by the detection unit. This enables a reduction in excessive detection of the abnormality of the data processing system. This enables an appropriate detection of the abnormality of the data processing system.

The imaging unit may be a camera provided for the mobile object. The detection unit may be a radar provided for the mobile object. The data processing system may include a first system ranging from the camera to the recognition processor and a second system ranging from the radar to the recognition processing unit.

### ADVANTAGES OF THE INVENTION

The technology disclosed herein enables reduction of the increase in circuit size and power consumption due to addition of an abnormality detection function.

### BRIEF DESCRIPTION OF THE DRAWINGS

FIG. 1 is a block diagram illustrating a configuration of a vehicle control system according to an embodiment.
FIG. 2 is a block diagram illustrating a configuration of an external environment recognition unit.
FIG. 3 is a flowchart illustrating a basic operation of the external environment recognition unit.
FIG. 4 illustrates image data.
FIG. 5 illustrates a classification result of the image data.
FIG. 6 illustrates a concept of integrated data.
FIG. 7 illustrates two-dimensional data.
FIG. 8 is a flowchart illustrating an abnormality detection operation performed by an abnormality detector.
FIG. 9 illustrates a specific structure of an arithmetic unit.

### DESCRIPTION OF EMBODIMENT

An embodiment will be described in detail below with reference to the drawings. Note that the same or corresponding parts are denoted by the same reference characters in the drawings, and the description thereof will not be repeated. A vehicle control system 10 will be described below as an example mobile object control system that controls an operation of a mobile object.

### (Embodiment)

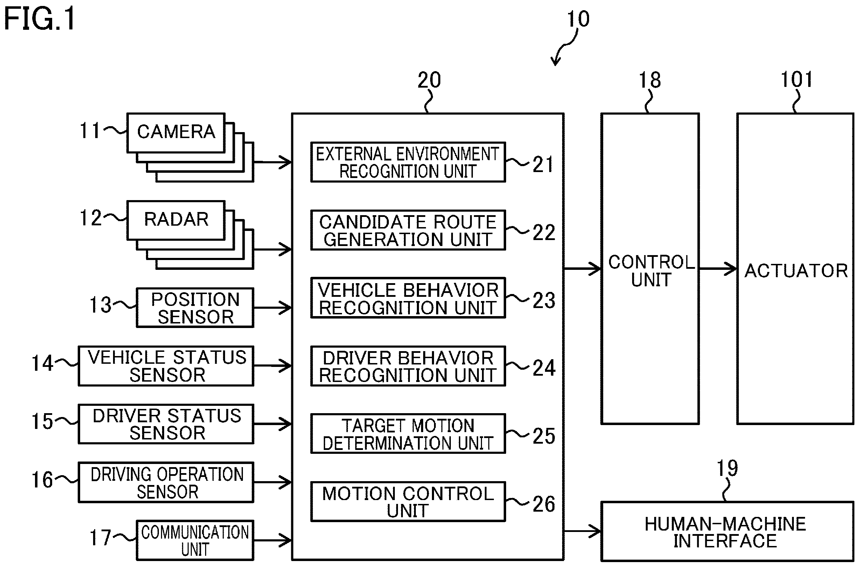

FIG. 1 illustrates a configuration of the vehicle control system 10. The vehicle control system 10 is provided for a vehicle (four-wheeled vehicle in this example) that is an example mobile object. The vehicle can switch among manual driving, assisted driving, and self-driving. In the manual driving, the vehicle travels in accordance with the operations by the driver (e.g., the operations of an accelerator or other elements). In assisted driving, the vehicle travels in accordance with the assistance of the driver's operations. In the self-driving, the vehicle travels without the driver's operations. In the self-driving and assisted driving, the vehicle control system 10 controls an actuator 101 provided for the vehicle to control the operation of the vehicle. The actuator 101 includes the engine, the transmission, the brake, and the steering, for example.

In the following description, the vehicle provided with the vehicle control system 10 is referred to as "the subject vehicle," whereas another vehicle present around the subject vehicle is referred to as "another vehicle (other vehicles)."

In this example, the vehicle control system 10 includes a plurality of cameras 11, a plurality of radars 12, a position sensor 13, a vehicle status sensor 14, a driver status sensor 15, a driving operation sensor 16, a communication unit 17, a control unit 18, a human-machine interface 19, and an arithmetic unit 20. The arithmetic unit 20 is an example external environment recognition device.

### [Camera (Imaging Unit)]

The cameras 11 have the same configuration. The cameras 11 each take an image of an external environment of a subject vehicle to acquire image data representing the external environment of the subject vehicle. The image data acquired by the cameras 11 is transmitted to the arithmetic unit 20. The cameras 11 are each an example imaging unit that takes an image of an external environment of a mobile object.

In this example, the cameras 11 are each a monocular camera having a wide-angle lens. The cameras 11 are disposed on the subject vehicle such that an imaging area of the external environment of the subject vehicle by the cameras 11 covers the entire circumference of the subject vehicle. The cameras 11 are each constituted by a solid imaging element such as a charge-coupled device (CCD) and a complementary metal-oxide-semiconductor (CMOS), for example. The cameras 11 may each be a monocular camera having a commonly used lens (e.g., a narrow-angle lens) or a stereo camera.

### [Radar (Detection Unit)]

The radars 12 have the same configuration. The radars 12 each detect an external environment of the subject vehicle. Specifically, the radars 12 each transmit radio waves (example sensing waves) toward the external environment of the subject vehicle and receive reflected waves from the external environment of the subject vehicle to detect the external environment of the subject vehicle. Detection results from the radars 12 are transmitted to the arithmetic unit 20. The radars 12 are each an example detection unit that detects an external environment of the mobile object. The detection unit transmits the sensing waves toward the external environment of the mobile object and receives reflected waves from the external environment of the mobile object to detect the external environment of the mobile object.

In this example, the radars 12 are disposed on the subject vehicle such that a detecting area of the external environment of the subject vehicle by the radars 12 covers the entire circumference of the subject vehicle. The radars 12 may each be a millimeter-wave radar that transmits millimeter waves (example sensing waves), a lidar (light detection and ranging) that transmits laser light (example sensing waves), an infrared radar that transmits infrared rays (example sensing waves), or an ultrasonic radar that transmits ultrasonic waves (example sensing waves), for example.

### [Position Sensor]

The position sensor 13 detects the position (e.g., the latitude and the longitude) of the subject vehicle. The position sensor 13 receives GPS information from the Global Positioning System and detects the position of the subject vehicle, based on the GPS information, for example. The position of the subject vehicle detected by the position sensor 13 is transmitted to the arithmetic unit 20.

### [Vehicle Status Sensor]

The vehicle status sensor 14 detects the status (e.g., the speed, the acceleration, the yaw rate, and the like) of the subject vehicle. The vehicle status sensor 14 includes a vehicle speed sensor that detects the speed of the subject vehicle, an acceleration sensor that detects the acceleration of the subject vehicle, a yaw rate sensor that detects the yaw rate of the subject vehicle, and other sensors, for example. The status of the subject vehicle detected by the vehicle status sensor 14 is transmitted to the arithmetic unit 20.

### [Driver Status Sensor]

The driver status sensor 15 detects the status (e.g., the health condition, the emotion, the body behavior, and the like) of a driver driving the subject vehicle. The driver status sensor 15 includes an in-vehicle camera that takes an image of the driver, a bio-information sensor that detects bio-information of the driver, and other sensors, for example. The status of the driver detected by the driver status sensor 15 is transmitted to the arithmetic unit 20.

### [Driving Operation Sensor]

The driving operation sensor 16 detects driving operations applied to the subject vehicle. The driving operation sensor 16 includes a steering angle sensor that detects a steering angle of the steering wheel of the subject vehicle, an acceleration sensor that detects an accelerator operation amount of the subject vehicle, a brake sensor that detects a brake operation amount of the subject vehicle, and other sensors, for example. The driving operations detected by the driving operation sensor 16 are transmitted to the arithmetic unit 20.

### [Communication Unit]

The communication unit 17 communicates with an external device provided outside the subject vehicle. The communication unit 17 receives communication information from another vehicle (not shown) positioned around the subject vehicle, traffic information from a navigation system (not shown), and other information, for example. The information received by the communication unit 17 is transmitted to the arithmetic unit 20.

### [Control Unit]

The control unit 18 is controlled by the arithmetic unit 20 to control the actuator 101 provided for the subject vehicle. The control unit 18 includes a powertrain device, a brake device, a steering device, and other devices, for example. The powertrain device controls the engine and transmission included in the actuator 101, based on a target driving force indicated by a driving command value, which will be described later. The brake device controls the brake included in the actuator 101, based on a target braking force indicated by a braking command value, which will be described later. The steering device controls the steering included in the actuator 101, based on a target steering amount indicated by a steering command value, which will be described later.

### [Human-Machine Interface]

The human-machine interface 19 is for inputting/outputting information between the arithmetic unit 20 and an occupant (in particular, a driver) of the subject vehicle. The human-machine interface 19 includes a display that displays information, a speaker that outputs information as sound, a microphone that inputs sound, and an operation unit operated by an occupant (in particular, a driver) of the subject vehicle, and other units, for example. The operation unit is a touch panel or a button.

### [Arithmetic Unit]

The arithmetic unit 20 determines a target route to be traveled by the subject vehicle and a target motion required for the subject vehicle to travel the target route, based on outputs from the sensors provided for the subject vehicle, the information transmitted from outside of the subject vehicle, and the like. The arithmetic unit 20 controls the control unit 18 to control the actuator 101 such that the motion of the subject vehicle matches the target motion. For example, the arithmetic unit 20 is, for example, an electronic control unit (ECU) having one or more arithmetic chips. In other words, the arithmetic unit 20 is an electronic control unit (ECU) having one or more processors, one or more memories storing programs and data for operating the one or more processors, and other units.

In this example, the arithmetic unit 20 includes an external environment recognition unit 21, a candidate route generation unit 22, a vehicle behavior recognition unit 23, a driver behavior recognition unit 24, a target motion determination unit 25, and a motion control unit 26. These units are some of the functions of the arithmetic unit 20.

The external environment recognition unit 21 recognizes an external environment of the subject vehicle. The candidate route generation unit 22 generates one or more candidate routes, based on the output from the external environment recognition unit 21. The candidate routes are routes which can be traveled by the subject vehicle, and also candidates for the target route.

The vehicle behavior recognition unit 23 recognizes the behavior (e.g., the speed, the acceleration, the yaw rate, and the like) of the subject vehicle, based on the output from the vehicle status sensor 14. For example, the vehicle behavior recognition unit 23 recognizes the behavior of the subject vehicle based on the output from the vehicle status sensor 14 using a learned model generated by deep learning. The driver behavior recognition unit 24 recognizes the behavior (e.g., the health condition, the emotion, the body behavior, and the like) of the driver, based on the output from the driver status sensor 15. For example, the driver behavior recognition unit 24 recognizes the behavior of the driver based on the output from the driver status sensor 15 using a learned model generated by deep learning.

The target motion determination unit 25 selects a candidate route as a target route from the one or more candidate routes generated by the candidate route generation unit 22, based on the output from the vehicle behavior recognition unit 23 and the output from the driver behavior recognition unit 24. For example, the target motion determination unit 25 selects a candidate route that the driver feels most comfortable with, out of the candidate routes. The target motion determination unit 25 then determines a target motion, based on the candidate route selected as the target route.

The motion control unit 26 controls a control unit 18, based on the target motion determined by the target motion determination unit 25. For example, the motion control unit 26 derives a target driving force, a target braking force, and a target steering amount, which are a driving force, a braking force, and a steering amount for achieving the target motion, respectively. The motion control unit 26 then transmits a driving command value representing the target driving force, a braking command value representing the target braking force, and a steering command value representing the target steering amount, to the powertrain device, the brake device, and the steering device included in the control unit 18, respectively.

### [External Environment Recognition Unit]

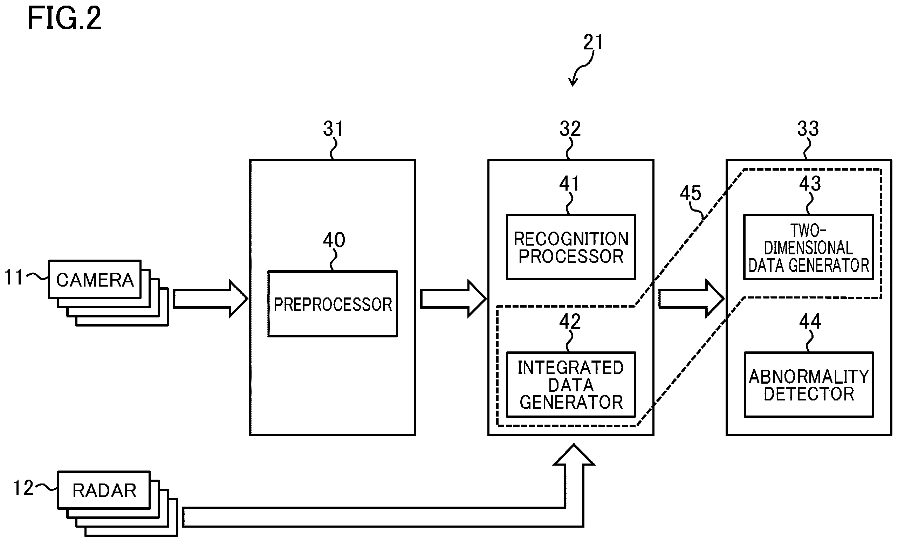

FIG. 2 illustrates a configuration of the external environment recognition unit 21. In this example, the external environment recognition unit 21 includes an image processing chip 31, an artificial intelligence accelerator 32, and a control chip 33. The image processing chip 31, the artificial intelligence accelerator 32, and the control chip 33 each have a processor and a memory storing a program and data for operating the processor, for example.

In this example, the external environment recognition unit 21 includes a preprocessor 40, a recognition processor 41, an integrated data generator 42, a two-dimensional data generator 43, and an abnormality detector 44. These units are some of the functions of the external environment recognition unit 21. In this example, the image processing chip 31 is provided with the preprocessor 40; the artificial intelligence accelerator 32 is provided with the recognition processor 41 and the integrated data generator 42; and the control chip 33 is provided with the two-dimensional data generator 43 and the abnormality detector 44.

### <Preprocessor>

The preprocessor 40 performs preprocessing on the image data acquired by the cameras 11. The preprocessing includes distortion correction processing for correcting the distortion of an image represented in the image data, white balance adjustment processing for adjusting the brightness of the image represented in the image data, and the like.

### <Recognition Processor>

The recognition processor 41 recognizes an external environment of the subject vehicle, based on the image data that has been preprocessed by the preprocessor 40. In this example, the recognition processor 41 outputs a recognition result of the external environment of the subject vehicle, based on the external environment of the subject vehicle recognized based on the image data and detection results from the radars 12 (i.e., the external environment of the subject vehicle detected by the radars 12).

### <Integrated Data Generator>

The integrated data generator 42 generates integrated data, based on the recognition result from the recognition processor 41. The integrated data is acquired by integrating data on the movable area and the target included in the external environment of the subject vehicle recognized by the recognition processor 41. In this example, the integrated data generator 42 generates integrated data, based on the recognition result from the recognition processor 41.

### <Two-dimensional Data Generator>

The two-dimensional data generator 43 generates two-dimensional data, based on the integrated data generated by the integrated data generator 42. The two-dimensional data is acquired by two-dimensionalizing data on the movable area and the target included in the integrated data.

### <External Environment Data Generation Unit>

In this example, the integrated data generator 42 and the two-dimensional data generator 43 constitute the external environment data generation unit 45. The external environment data generation unit 45 generates external environment data (object data), based on the recognition result from the recognition processor 41. The external environment data represents the external environment of the subject vehicle recognized by the recognition processor 41. In this example, the external environment data generation unit 45 generates external environment data, based on the recognition result from the recognition processor 41.

### <Abnormality Detector>

The abnormality detector 44 detects an abnormality of a data processing system including the cameras 11, the recognition processor 41, and the radars 12, based on consistency between the external environment of the vehicle recognized by the recognition processor 41 based on the image data and the external environment of the vehicle detected by the radars 12. In this example, the data processing system including the cameras 11, the recognition processor 41, and the radars 12 includes a first system ranging from the cameras 11 to the recognition processor 41 through the preprocessor 40 and a second system ranging from the radars 12 to the recognition processor 41. For example, the abnormality detector 44 may be configured to detect, by using the learned model generated by deep learning, the consistency between the recognition result from the recognition processor 41 based on the image data and the detection result from the radars 12, in the abnormality detection processing to detect the abnormality of the data processing system. The learned model is for detecting the consistency between the recognition result from the recognition processor 41 based on the image data and the detection result from the radars 12. The abnormality detector 44 may be configured to detect the consistency between the recognition result from the recognition processor 41 based on the image data and the detection result from the radars 12 by using another known consistency detection technique.

### [Basic Operation of External Environment Recognition Unit]

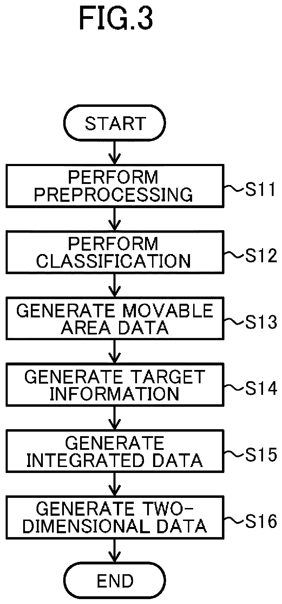

Next, a basic operation of the external environment recognition unit 21 will be described with reference to FIG. 3.

### <Step S11>

First, the preprocessor 40 performs preprocessing on image data acquired by the cameras 11. In this example, the preprocessor 40 performs preprocessing on a plurality of pieces of image data acquired by a plurality of cameras 11. The preprocessing includes distortion correction processing for correcting the distortion of an image represented in the image data (the distortion due to the wider angles of view of the cameras 11 in this example), white balance adjustment processing for adjusting the white balance of the image represented in the image data, and the like. When there is no distortion in the image data acquired by the cameras 11 (e.g., when cameras having a normal lens are used), the distortion correction processing may be omitted.

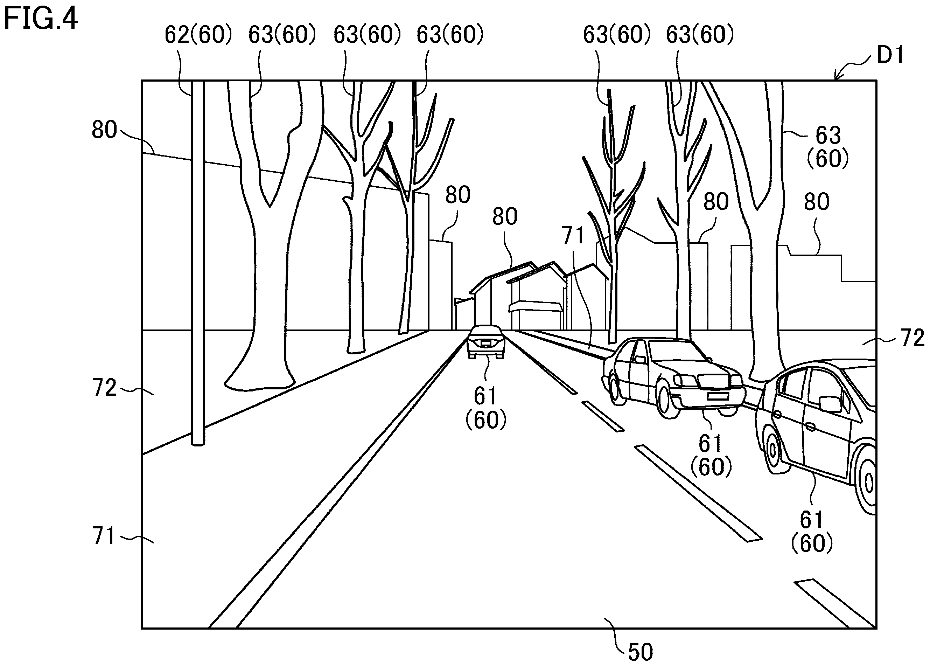

As illustrated in FIG. 4, the external environment of the subject vehicle represented in the image data D1 includes a roadway 50, sidewalks 71, and empty lots 72. The roadway 50 is an example movable area in which the subject vehicle is movable. The external environment of the subject vehicle represented in the image data D1 also includes other vehicles 61, a sign 62, roadside trees 63, and buildings 80. The other vehicles (e.g., four-wheeled vehicles) 61 are example dynamic objects displaced over time. Other examples of the dynamic object include a motorcycle, a bicycle, a pedestrian, and other objects. The sign 62 and the roadside trees 63 are example stationary objects not displaced over time. Other examples of the stationary object include a median strip, a center pole, a building, and other objects. The dynamic and stationary objects are example targets 60.

In the example shown in FIG. 4, the sidewalks 71 are located outside the roadway 50, and the empty lots 72 are located outside the sidewalks 71 (at far ends from the roadway 50). In the example shown in FIG. 4, one of lanes of the roadway 50 is traveled by the subject vehicle and another vehicle 61, and the opposite lane of the roadway 50 is traveled by two other vehicles 61. The sign 62 and the roadside trees 63 are arranged along the outside of the sidewalks 71. The buildings 80 are located in positions far ahead of the subject vehicle.

### <Step S12>

Next, the recognition processor 41 performs classification processing on the image data D1. In this example, the recognition processor 41 performs classification processing on a plurality of pieces of image data acquired by a plurality of cameras 11. In the classification processing, the recognition processor 41 classifies the image represented in the image data D1 on a pixel-by-pixel basis, and adds classification information indicating the result of the classification to the image data D1. By this classification processing, the recognition processor 41 recognizes a movable area and targets in the image represented in the image data D1 (image representing the external environment of the subject vehicle). For example, the recognition processor 41 performs classification processing using a learned model generated by deep learning. The learned model is for classifying the image represented in the image data D1 on a pixel-by-pixel basis. The recognition processor 41 may be configured to perform classification processing by using another known classification technique.

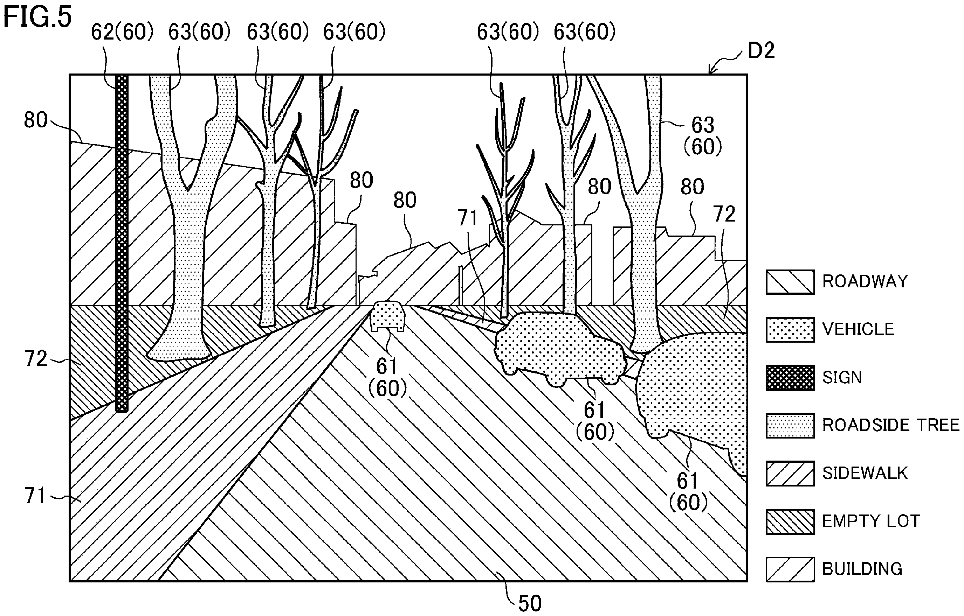

FIG. 5 shows a segmented image D2 illustrating an example of a classification result of the image represented in the image data D1. In the example of FIG. 5, the image represented in the image data D1 is classified into the roadway, the vehicle, the sign, the roadside tree, the sidewalk, the empty lot, and the building on a pixel-by-pixel basis.

### <Step S13>

Next, the recognition processor 41 performs movable area data generation processing on the image data. In the movable area data generation processing, the recognition processor 41 specifies a pixel region classified as a movable area (the roadway 50 in this example) by the classification processing, from the image represented in the image data D1, and generates movable area data, based on the specified pixel region. The movable area data is data (three-dimensional map data in this example) representing a movable area recognized by the recognition processor 41. In this example, the recognition processor 41 generates movable area data, based on a movable area specified in each of the plurality of pieces of image data acquired by the cameras 11 at the same time point. For example, a known three-dimensional data generation technique may be used for the known three-dimensional data generation technique.

### <Step S14>

The recognition processor 41 performs target information generation processing. In the target information generation processing, the recognition processor 41 performs first information generation processing, second information generation processing, and information integration processing.

The first information generation processing is performed on the image data. In this example, the recognition processor 41 performs first information generation processing on a plurality of pieces of image data acquired from a plurality of cameras 11. In the first information generation processing, the recognition processor 41 specifies pixel region classified as a target 60 by the classification processing, form the image represented in the image data D1, and generates target information based on the specified pixel region. When a plurality of targets 60 are recognized from the image represented in the image data D1, the recognition processor 41 performs first information generation processing on each of the targets 60. The target information is information on the target 60, and indicates the kind and shape of the target 60, the distance and direction from the subject vehicle to the target 60, the position of the target 60 relative to the subject vehicle, the magnitude and direction of the relative speed of the target 60 relative to the moving speed of the subject vehicle, and the like. For example, the recognition processor 41 performs first information generation processing using a learned model generated by deep learning. This learned model is for generating target information, based on the pixel region (a pixel region classified as a target 60) specified from the image represented in the image data D1. The recognition processor 41 may be configured to perform first information generation processing using another known information generation technique (target detection technique).

The second information generation processing is performed on outputs from the radars 12. In this example, the recognition processor 41 performs the second information generation processing based on the outputs from a plurality of radars 12. In the second information generation processing, the recognition processor 41 generates target information, based on the detection results from the radars 12. For example, the recognition processor 41 performs analysis processing on the detection results from the radars 12 (the intensity distribution of reflected waves representing the external environment of the subject vehicle), to derive target information (the kind and shape of the target 60, the distance and direction from the subject vehicle to the target 60, the position of the target 60 relative to the subject vehicle, the magnitude and direction of the relative speed of the target 60 relative to the moving speed of the subject vehicle, and the like). The recognition processor 41 may be configured to perform second information generation processing using a learned model generated by deep learning (a learned model for generating target information, based on the detection results from the radars 12), or to perform second information generation processing using another known analysis technique (target detection technique).

In the information integration processing, the recognition processor 41 integrates target information obtained by first information generation processing and target information obtained by second information generation processing, to generate new target information. For example, for each of the parameters (specifically, the kind and shape of the target 60, the distance and direction from the subject vehicle to the target 60, the position of the target 60 relative to the subject vehicle, the magnitude and direction of the relative speed of the target 60 relative to the moving speed of the subject vehicle, and the like) included in the target information, the recognition processor 41 compares the parameter of the target information acquired by the first information generation processing with the parameter of the target information acquired by the second information generation processing, and determines the parameter with higher accuracy between the two parameters as the parameter included in new target information.

### <Step S15>

Next, the integrated data generator 42 integrates the movable area data generated in the Step S13 and the target information generated in the step S14 to generate integrated data D3. The integrated data D3 is data (the three-dimensional map data in this example) generated by integrating pieces of data on the movable area (the roadway 50 in this example) and the target 60 recognized by the recognition processor 41. For example, the integrated data generator 42 may be configured to generate integrated data D3 from the movable area data and the target information by using a known data integration technique.

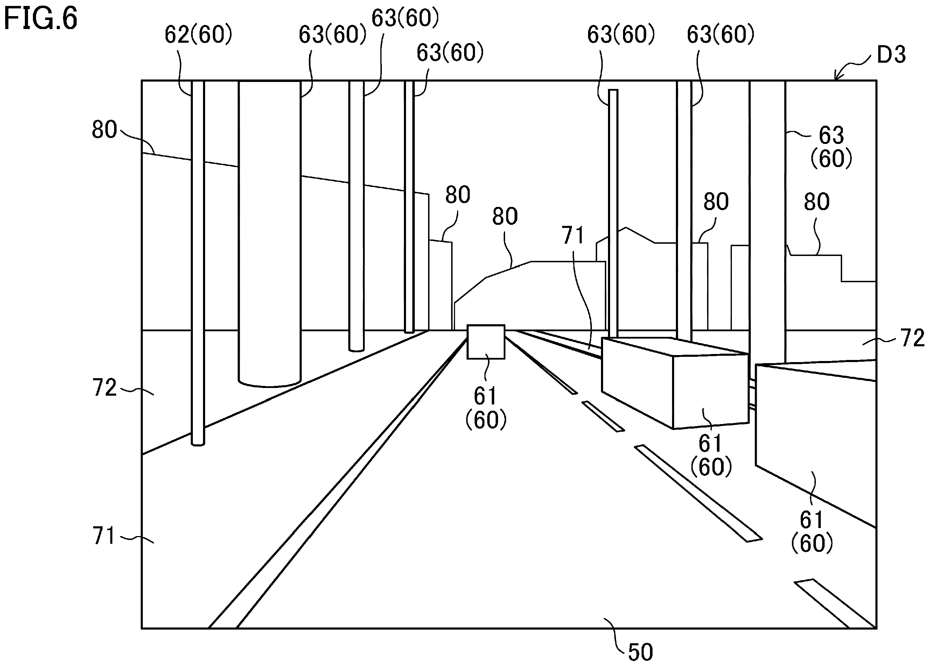

FIG. 6 illustrates a concept of the integrated data D3. As illustrated in FIG. 6, the targets 60 are abstracted in the integrated data D3.

### <Step S16>

Next, the two-dimensional data generator 43 generates two-dimensional data D4 by two-dimensionalizing the integrated data D3. The two-dimensional data D4 is two-dimensional data (the two-dimensional map data in this example) on the movable area (the roadway 50 in this example) and the targets 60 included in the integrated data D3. For example, the two-dimensional data generator 43 may be configured to generate the two-dimensional data D4 from the integrated data D3 by using a known two-dimensional data generation technique.

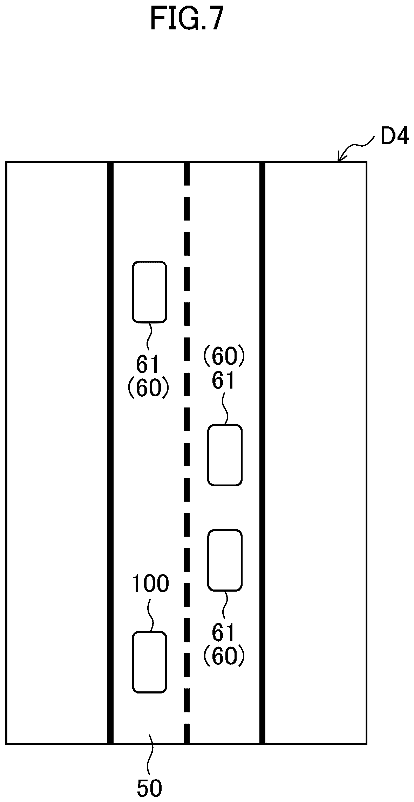

As illustrated in FIG. 7, in the two-dimensional data D4, the movable area (the roadway 50 in this example) and the target 60 (the subject vehicle 100 in this example) are made two-dimensional. In this example, the two-dimensional data D4 corresponds to a bird's-eye view of the subject vehicle 100 (a view looking down the subject vehicle 100 from above). The two-dimensional data D4 includes data on the roadway 50, other vehicles 61, and the subject vehicle 100.

### [Abnormality Detection Processing]

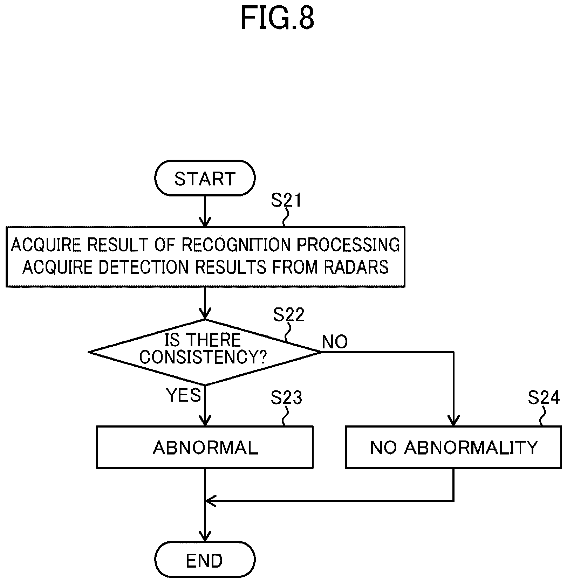

Next, the abnormality detection processing (the processing to detect the abnormality of the data processing system) by the abnormality detector 44 will be described with reference to FIG. 8.

### <Step S21>

First, the abnormality detector 44 acquires a recognition result from the recognition processor 41 based on the image data and detection results from the radars 12. For example, the abnormality detector 44 acquires target information acquired through the first information generation processing performed by the recognition processor 41 (an example recognition result from the recognition processor 41 based on the image data) and target information acquired through the second information generation processing performed by the recognition processor 41 (example detection results from the radars 12).

### <Step S22>

Next, the abnormality detector 44 determines whether or not the external environment recognized by the recognition processor 41 based on the image data is consistent with the external environment detected by the radars 12. If there is consistency, the Step S23 is performed, and if not, the Step S24 is performed.

### <Step S23>

If there is consistency between the external environment recognized by the recognition processor 41 based on the image data and the external environment detected by the radars 12, the abnormality detector 44 determines that the data processing system including the cameras 11, the recognition processor 41, and the radars 12 has no abnormality.

### <Step S24>

If there is no consistency between the external environment recognized by the recognition processor 41 based on the image data and the external environment detected by the radars 12, the abnormality detector 44 determines that the data processing system including the cameras 11, the recognition processor 41, and the radars 12 has the abnormality.

### [Causal Relationship of Abnormality]

A causal relationship between the abnormality of the data processing system including the cameras 11, the recognition processor 41, and the radars 12 and a failure in consistency between the recognition result from the recognition processor 41, based on the image data, and the detection result from the radars 12 will be described. Hereinafter, the recognition result from the recognition processor 41 based on the image data is merely referred to as "the recognition result from the recognition processor 41." If the data processing system including the cameras 11, the recognition processor 41, and the radars 12 has no abnormality, both of the recognition result from the recognition processor 41 and the detection result from the radars 12 are normal. This can be regarded as that the recognition result from the recognition processor 41 is consistent with the detection result from the radars 12, thereby establishing the consistency between the recognition result from the recognition processor 41 and the detection result from the radars 12. If the data processing system including the cameras 11, the recognition processor 41, and the radars 12 has the abnormality, either the recognition result from the recognition processor 41 or the detection result from the radars 12 is abnormal. This cannot be regarded as that the recognition result from the recognition processor 41 is consistent with the detection result from the radars 12, thereby failing the consistency between the recognition result from the recognition processor 41 and the detection result from the radars 12.

### [Specific Example of Determination of Consistency]

A specific example of the determination of consistency (consistency between the recognition result from the recognition processor 41 and the detection result from the radars 12) by the abnormality detector 44 will be described. Parameters with which the consistency is determined include the shape of the movable area (the roadway 50 in this example), the position of the movable area relative to the subject vehicle, the kind of the target 60, the shape of the target 60, the distance and direction from the subject vehicle to the target 60, the position of the target 60 relative to the subject vehicle, the magnitude and direction of the relative speed of the target 60 relative to the moving speed of the subject vehicle, and other parameters.

For determination of the consistency based on the shape of the movable area (or the target 60), if the difference (e.g., the difference in area) between the shape of the movable area (or the target 60) recognized by the recognition processor 41 based on the image data and the shape of the movable area (or the target 60) detected by the radars 12 is below a predetermined threshold value, the abnormality detector 44 determines that the recognition result from the recognition processor 41 is consistent with the detection result from the radars 12. If not, the abnormality detector 44 determines that the recognition result from the recognition processor 41 is inconsistent with (fails to be in consistent with) the detection result from the radars 12.

For determination of the consistency based on the position of the movable area (or the target 60) relative to the subject vehicle, if the difference (e.g., the amount of displacement) between the position of the movable area (or the target 60) recognized by the recognition processor 41 based on the image data and the position of the movable area (or the target 60) detected by the radars 12 is below a predetermined threshold value, the abnormality detector 44 determines that the recognition result from the recognition processor 41 is consistent with the detection result from the radars 12. If not, the abnormality detector 44 determines that the recognition result from the recognition processor 41 is inconsistent with (fails to be in consistent with) the detection result from the radars 12.

For determination of the consistency based on the kind of the target 60, if the kind of the target 60 recognized by the recognition processor 41 based on the image data is consistent with the kind of the target 60 detected by the radars 12, the abnormality detector 44 determines that the recognition result from the recognition processor 41 is consistent with the detection result from the radars 12. If not, the abnormality detector 44 determines that the recognition result from the recognition processor 41 is inconsistent with (fails to be in consistent with) the detection result from the radars 12.

For determination of the consistency based on the distance and direction from the subject vehicle to the target 60, if the difference (the amount of displacement in the distance and direction) between the distance and direction to the target 60 recognized by the recognition processor 41 based on the image data and the distance and direction to the target 60 detected by the radars 12 is below a predetermined threshold value, the abnormality detector 44 determines that the recognition result from the recognition processor 41 is consistent with the detection result from the radars 12. If not, the abnormality detector 44 determines that the recognition result from the recognition processor 41 is inconsistent with (fails to be in consistent with) the detection result from the radars 12.

For determination of the consistency based on the magnitude and direction of the relative speed of the target 60 relative to the moving speed of the subject vehicle, if the difference (e.g., the amount of displacement in the speed and direction) between the magnitude and direction of the relative speed of the target 60 recognized by the recognition processor 41 based on the image data and the magnitude and direction of the relative speed of the target 60 detected by the radars 12 is below a predetermined threshold value, the abnormality detector 44 determines that the recognition result from the recognition processor 41 is consistent with the detection result from the radars 12. If not, the abnormality detector 44 determines that the recognition result from the recognition processor 41 is inconsistent with (fails to be in consistent with) the detection result from the radars 12.

The abnormality detector 44 may be configured to determine the consistency (consistency between the recognition result from the recognition processor 41 and the detection results from the radar 12), based on any one of the parameters, or may be configured to determine the consistency based on two or more of the parameters.

For determination of the consistency based on two or more of the parameters, the abnormality detector 44 may be configured to determine that the recognition result from the recognition processor 41 is consistent with the detection result from the radars 12 if the number of parameters for which the consistency is established among the two or more parameters exceeds a predetermined number.

### [Advantages of Embodiment]

As described above, the arithmetic unit 20 of this embodiment allows the abnormality of the data processing system targeted for abnormality detection to be detected without providing the entire data processing system with redundancy. This reduces the increase in circuit size and power consumption due to addition of an abnormality detection function compared with the case in which the entire data processing system targeted for abnormality detection is provided with redundancy.

### (First Variation of Embodiment)

In a preferred embodiment, the abnormality detector 44 is configured to detect the abnormality of the data processing system, based on consistency between at least one of targets included in the external environment of the vehicle recognized by the recognition processor 41 based on the image data and at least one of targets included in the external environment of the vehicle detected by radars 12. In a particularly preferred embodiment, the abnormality detector 44 is configured to detect the abnormality of the data processing system, based on consistency between a recognition result from the recognition processor 41 based on the image data and detection result from the radars 12 for at least one target, among targets included in the external environment of the vehicle, whose distances from the vehicle is within a predetermined distance range.

### [Advantages of First Variation of Embodiment]

In the arithmetic unit 20 of the first variation of this embodiment, the abnormality detector 44 detects the abnormality of the data processing system, based on consistency between targets 60 recognized by the recognition processor 41 based on the image data and targets 60 detected by the radars 12. The radars 12 are more likely to detect targets 60 (e.g., other vehicles 61) included in the external environment of the subject vehicle than the movable area (e.g., the roadway 50) included in the external environment of the subject vehicle. The detection of the abnormality of the data processing system, based on the consistency between the targets 60 recognized by the recognition processor 41 based on the image data and the targets detected by the radars 12 allows improvement in accuracy of detecting the abnormality of the data processing system, compared with the case of the detection of the abnormality of the data processing system, based on the consistency between the movable area (the roadway 50 in this example) recognized by the recognition processor 41 based on the image data and the movable area detected by the radars 12.

Further, the arithmetic unit 20 of the first variation of this embodiment allows the targets 60 whose distances from the subject vehicle are appropriate for properly taking images by the cameras 11 and properly performing detection by the radars 12 to be set as targets to be processed by the abnormality detector 44. This enables the detection of the abnormality of the data processing system, based on the consistency between the targets 60 properly recognized by the recognition processor 41 based on the image data and the targets 60 properly detected by the radars 12, thereby improving the accuracy of detecting the abnormality of the data processing system.

### (Second Variation of Embodiment)

The abnormality detector 44 may be configured to detect the abnormality of the data processing system, based on the duration of a failure in consistency between the external environment recognized by the recognition processor 41 based on the image data and the external environment detected by the radars 12. Specifically, in the second variation, the abnormality detector 44 determines that the data processing system has the abnormality if the duration of the failure in the consistency between the external environment recognized by the recognition processor 41 based on the image data and the external environment detected by the radars 12 exceeds a predetermined normal time, and determines that the data processing system has no abnormality if the duration of the failure in the consistency does not exceed the predetermined normal time.

### [Advantages of Second Variation of Embodiment]

In the arithmetic unit 20 of the second variation of this embodiment, the abnormality detector 44 detects an abnormality of a data processing system, based on a duration of a failure in consistency between the external environment recognized by the recognition processor 41 based on the image data and the external environment detected by the radars 12. This enables a reduction in excessive detection of the abnormality of the data processing system. For example, it is possible to avoid the situation in which the abnormality of the data processing system is erroneously detected when the consistency between the external environment recognized by the recognition processor 41 based on the image data and the external environment detected by the radars 12 is failed for a short period of time due to another cause (e.g., instantaneous noise and the like), which is not the abnormality of the data processing system. This enables an appropriate detection of the abnormality of the data processing system.

### (Specific Structure of Arithmetic Unit)

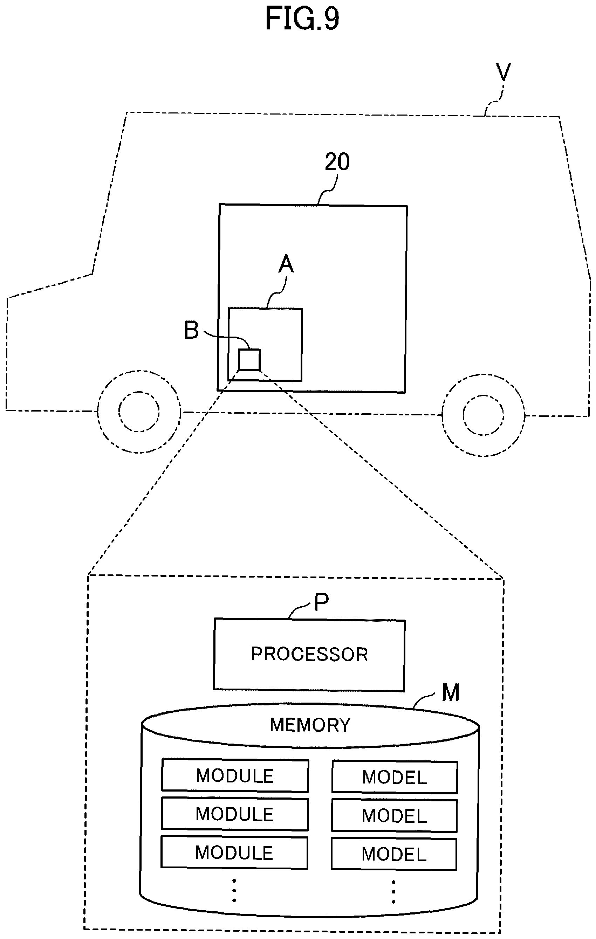

FIG. 9 illustrates a specific structure of the arithmetic unit 20. The arithmetic unit 20 is provided for a vehicle V. The arithmetic unit 20 includes one or more electronic control units (ECUs). The electronic control units each include one or more chips A. The chips A each have one or more cores B. The cores B each include a processor P and a memory M. That is, the arithmetic unit 20 includes one or more processors P and one or more memories M. The memories M each store a program and information for operating the processor P. Specifically, the memories M each store modules each of which is a software program executable by the processor P and data representing models to be used in processing by the processor P, for example. The functions of the units of the arithmetic unit 20 are achieved by the processor P executing the modules stored in the memories M.

### (Other Embodiments)

The above description provides an example of the vehicle (four-wheeled vehicle) as a mobile object, but this is not limiting. For example, the mobile object may be a ship, a train, an aircraft, a motorcycle, an autonomous mobile robot, a vacuum cleaner, a drone, or the like.

Further, the above description provides an example of providing the two-dimensional data generator 43 for a control chip 33, but this is not limiting. For example, the two-dimensional data generator 43 may be provided for an artificial intelligence accelerator 32 or any other arithmetic chip. Similarly, the abnormality detector 44 may be provided for a control chip 33, an artificial intelligence accelerator 32, or any other arithmetic chip. The same applies to other configurations (e.g., the preprocessor 40 and other units) of the external environment recognition unit 21 and other configurations (e.g., the candidate route generation unit 22 and other units) of the arithmetic unit 20.

Further, the above description provides an example configuration in which the external environment recognition unit 21 has an image processing chip 31, an artificial intelligence accelerator 32, and a control chip 33, but this is not limiting. For example, the external environment recognition unit 21 may have two or less arithmetic chips or four or more arithmetic chips. The same applies to other configurations (e.g., the preprocessor 40 and other units) of the external environment recognition unit 21 and other configurations (e.g., the candidate route generation unit 22 and other units) of the arithmetic unit 20.

The foregoing embodiment and variations thereof may be implemented in combination as appropriate. The foregoing embodiment and variations thereof are merely beneficial examples in nature, and are not intended to limit the scope, applications, or use of the present disclosure.

### INDUSTRIAL APPLICABILITY

As can be seen from the foregoing description, the technology disclosed herein is useful as an external environment recognition device that recognizes an external environment of a mobile object.

### DESCRIPTION OF REFERENCE CHARACTERS

- 10: Vehicle Control System (Mobile Object Control System)
- 11: Camera (Imaging Unit)
- 12: Radar (Detection Unit)
- 13: Position Sensor
- 14: Vehicle Status Sensor
- 15: Driver Status Sensor
- 16: Driving Operation Sensor
- 17: Communication Unit
- 18: Control Unit
- 19: Human-Machine Interface
- 20: Arithmetic Unit
- 21: External Environment Recognition Unit
- 22: Candidate Route Generation Unit
- 23: Vehicle Behavior Recognition Unit
- 24: Driver Behavior Recognition Unit
- 25: Target Motion Determination Unit
- 26: Motion Control Unit
- 31: Image Processing Chip
- 32: Artificial Intelligence Accelerator
- 33: Control Chip
- 40: Preprocessor
- 41: Recognition Processor
- 42: Integrated Data Generator
- 43: Two-dimensional Data Generator
- 44: Abnormality Detector
- 45: External Environment Data Generation Unit
- 50: Roadway (Movable Area)
- 60: Target
- 61: Another Vehicle
- 62: Sign
- 63: Roadside Tree
- 71: Sidewalk
- 72: Empty Lot
- 80: Building
- 100: Vehicle (Mobile Object)
- 101: Actuator

## Claims

1. An external environment recognition device that recognizes an external environment of a mobile object, the external environment recognition device comprising:
a recognition processor that recognizes an external environment of the mobile object, based on image data acquired by an imaging unit that takes an image of the external environment of the mobile object, and outputs a recognition result of the external environment of the mobile object, based on the external environment of the mobile object recognized based on the image data and a detection result from a detection unit that detects the external environment of the mobile object; and
an abnormality detector that detects an abnormality of a data processing system including the imaging unit, the recognition processor, and the detection unit, based on consistency between the external environment recognized by the recognition processor based on the image data and the external environment detected by the detection unit.

2. The external environment recognition device of claim 1, wherein
the detection unit transmits sensing waves toward the external environment of the mobile object and receives reflected waves from the external environment to detect the external environment of the mobile object, and
the abnormality detector detects the abnormality of the data processing system, based on consistency between at least one of targets included in the external environment recognized by the recognition processor based on the image data and at least one of the targets included in the external environment detected by the detection unit.

3. The external environment recognition device of claim 2, wherein
the abnormality detector detects the abnormality of the data processing system, based on consistency between a recognition result from the recognition processor based on the image data and a detection result from the detection unit for at least one target, among the targets included in the external environment of the mobile object, whose distance from the mobile object is within a predetermined distance range.

4. The external environment recognition device of any one of claims 1 to 3, wherein
the abnormality detector detects the abnormality of the data processing system, based on the duration of a failure in consistency between the external environment recognized by the recognition processor based on the image data and the external environment detected by the detection unit.

5. The external environment recognition device of any one of claims 1 to 4, wherein
the imaging unit is a camera provided for the mobile object,
the detection unit is a radar provided for the mobile object, and
the data processing system includes a first system ranging from the camera to the recognition processor, and a second system ranging from the radar to the recognition processor.
